Europäisches Patentamt

(19) European Patent Office

Office européen des brevets

(11) Numéro de publication: **0 244 541**
**B1**

(12) FASCICULE DE BREVET EUROPEEN

(45) Date de publication du fascicule du brevet:
12.12.90

(21) Numéro de dépôt: 86400981.6

(22) Date de dépôt: 06.05.86

(51) Int. Cl.⁵: **A01G 17/04**

(54) Procédé de pose d'éléments tubulaires et outil pour la mise en oeuvre du procédé.

(43) Date de publication de la demande:
**11.11.87 Bulletin 87/46**

(45) Mention de la délivrance du brevet:
**12.12.90 Bulletin 90/50**

(84) Etats contractants désignés:
**AT BE CH DE FR GB IT LI LU NL**

(56) Documents cités:
DE-U- 6 939 574
FR-A- 2 233 928
US-A- 2 349 110

(73) Titulaire: **Thevenin, Patrick D., Thilay,
F-08800 Montherme(FR)**
Titulaire: **Gissinger, Bernard C., Thilay,
F-08800 Montherme(FR)**
Titulaire: **Thevenin, Stéphane J., Thilay,
F-08800 Montherme(FR)**

(72) Inventeur: **Thevenin, Patrick D., Thilay,
F-08800 Montherme(FR)**
Inventeur: **Gissinger, Bernard C., Thilay,
F-08800 Montherme(FR)**
Inventeur: **Thevenin, Stéphane J., Thilay,
F-08800 Montherme(FR)**

(74) Mandataire: **Boutin, Antoine et al, CABINET PIERRE
LOYER 77, rue Boissière, F-75116 Paris(FR)**

## Description

L'invention concerne un procédé de mise en place dans un milieu tel que la terre, le sable ou le ciment, d'éléments tubulaires en forme de tubes, ne possédant pas par eux-mêmes la résistance au flambage nécessaire pour permettre que leur introduction dans le milieu considéré puisse se réaliser facilement par un effort appliqué à l'extrémité opposée à celle qui est introduite dans le milieu.

L'invention est plus particulièrement, mais non exclusivement, applicable à la pose de tuteurs temporaires pour vignobles.

Dans les vignes jeunes, il faut attendre parfois plusieurs années avant de pouvoir utiliser les dispositifs de palissage classiques, tant que la vigne n'a pas atteint une taille suffisante.

Pendant sa période de croissance, la jeune vigne est très fragile et l'on renforce habituellement les sarments grâce à des petits tuteurs temporaires, généralement constitués par des tubes minces en matière plastique, d'une longueur comprise entre 50 et 100 fois leur diamètre.

Ces tuteurs sont enfoncés dans la terre auprès de la jeune plante qu'ils ont pour mission de conforter.

La mise en place de ces tuteurs est très difficile, le tube se pliant lors de l'enfoncement, et cela d'autant plus, que le sol des vignobles est très souvent caillouteux.

Le document U.S. A 2 349 110 décrit un tuteur muni à l'une de ses extrémités d'une pointe en ailette destinée à pénétrer dans le sol et son autre extrémité conformée en boucle formant poignée et point d'attache, mais ne décrit pas un outil destiné à être retiré du sol après mise en place du tuteur.

L'invention vise à procurer un moyen facilitant la pose de ces tuteurs temporaires, qui assure une bonne pénétration du tube dans le sol et donc lui permettre de supporter une force d'enfoncement élevée, sans flamber ou se plier. L'invention vise, d'autre part, à procurer un moyen de renforcer et de contrôler la valeur de l'ancrage de l'élément tubulaire dans ledit milieu.

Selon l'invention:

– on enfile le tube sur une tige métallique dont l'extrémité basse dépassante est une pointe et dont l'extrémité supérieure est en forme de poignée;
– on enfonce l'outil garni du tube dans le sol;
– on retire l'outil lorsque la profondeur désirée a été atteinte.

La tige de l'outil empêche le tube de se plier, tandis que sa pointe réalise un avant-trou qui diminue considérablement la résistance à l'enfoncement du tube dans le sol. Le tube, poussé par son extrémité supérieure grâce à la poignée, pénètre ainsi sans effort dans le sol avec un serrage contrôlé proportionnel à la différence entre le diamètre interne du tuteur et celui de l'outil.

En conséquence l'invention concerne un outil enveloppé d'un tube enfonçable dans le sol, constitué par une tige dont l'extrémité inférieure est en pointe tandis que l'extrémité supérieure forme une poignée, caractérisé en ce que la tige est d'un diamètre inférieur au diamètre interne du tube afin d'être enfilée dans ledit tube, en ce que l'extrémité en pointe et l'extrémité formant poignée de la tige dépassent du tube et en ce que des moyens de butée pour le tube sont prévus sur la tige.

D'autres caractéristiques et avantages de l'invention ressortiront de la description qui va suivre, en référence aux dessins annexés, sur lesquels:

La figure 1 représente un exemple de réalisation préférentiel de l'outil selon l'invention, vu en coupe longitudinale, avec un tuteur en place.

La figure 2 est une vue conforme à celle de la figure 1, sur laquelle l'outil est en outre muni d'un gabarit d'enfoncement.

L'outil 1 est constitué principalement par une tige 2 d'acier, de préférence de section circulaire, dont l'extrémité inférieure 3 est en pointe, tandis que l'extrémité supérieure 4 est en forme de poignée de manœuvre et constitue une butée.

Dans l'exemple représenté, on a, en variante, soudé au raccordement entre la poignée 4 et la tige 2, une rondelle 5 qui forme butée et assure une répartition de la force d'enfoncement sur toute la circonférence de l'extrémité supérieure du tube 6.

Le tube 6 est, de préférence, d'un diamètre interne légèrement plus grand que le diamètre de la tige, ce qui lui permet de se comprimer légèrement lors de l'enfoncement.

Lorsqu'on pose le tube de manière habituelle, on exerce un effort sur son extrémité supérieure, effort qui ne peut pas être intégralement transmis, en raison de la tendance du tube au flambage, ce qui rend la pose très difficile, voire parfois impossible.

Lorsqu'on procède selon l'invention, la tige 2 de l'outil empêche le tube de flamber et la poignée 4, ou la rondelle 5, transmettent intégralement la force d'enfoncement dans l'axe du tuteur.

Par ailleurs, alors que lorsqu'on enfonce le tube de manière classique, la surface de terre repoussée à l'extérieur ou à l'intérieur du tube est sensiblement égale à $\pi$ d1 x e (d1 étant le diamètre moyen du tube et e son épaisseur) lorsqu'on utilise l'outil selon l'invention, cette surface de terre est augmentée de la surface de la tige de l'outil et se trouve pratiquement totalement à l'intérieur du tube selon la formule:

$$\frac{\pi\ d2^2}{4} + (\pi\ d1\ x\ e)$$

où d2 est le diamètre de la tige de l'outil.

Il en résulte que la pression exercée par la terre environnante sur le tube est environ 8 fois supérieure dans le second cas à ce qu'elle est dans le premier. La résistance du tube à l'arrachement est donc renforcée de manière très importante.

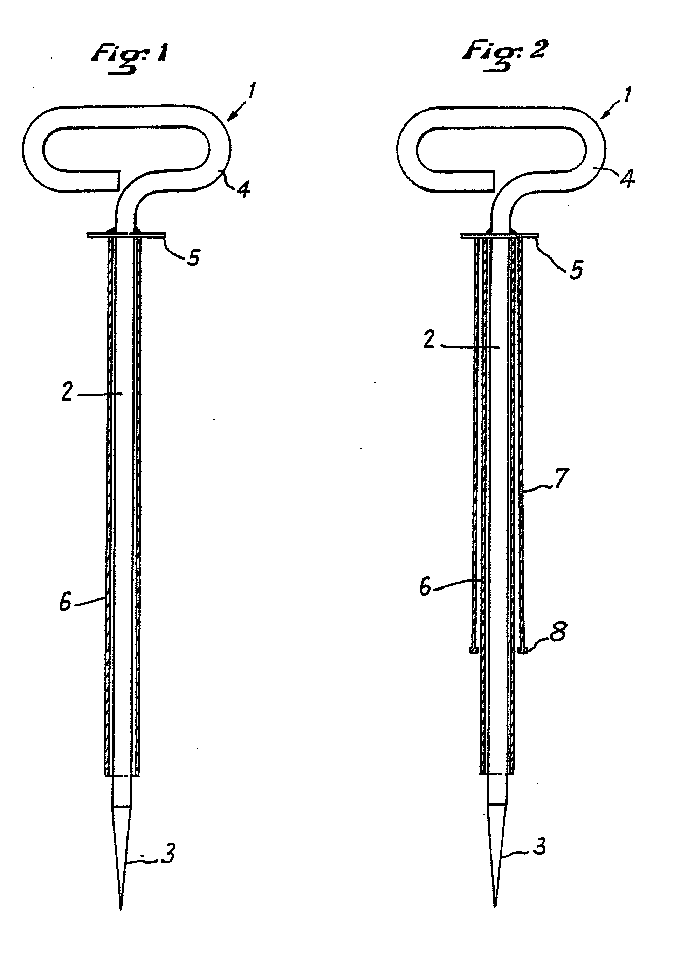

Selon une autre variante de réalisation représentée à la figure 2, la rondelle 5 est solidaire d'un tube 7 s'étendant parallèlement à la tige 2 sur environ les deux tiers de la longueur de la tige, de manière à former un gabarit d'enfoncement du tuteur. De préférence, l'extrémité inférieure du gabarit est munie d'un bourrelet 8 augmentant la surface d'appui au sol.

Dans l'exemple de la figure 2, le gabarit d'enfoncement 7 est un tube, mais il peut également être constitué par une simple plaquette ou tige solidaire de la rondelle 5 ou directement fixée sur la tige 2 ou la poignée 4 de l'outil.

Dans les exemples représentés sur la figure, la poignée est du type en forme de boucle bien adaptée à une préhension manuelle et à une application axiale de l'effort de pénétration.

Selon une variante de réalisation non représentée, cette poignée peut être également constituée comme un manche cylindrique massif à frapper. Dans ce cas, l'outil sera particulièrement bien adapté pour la pose de tuteurs ou piquets de grandes dimensions.

## Revendications

1. Procédé de pose dans un milieu tel que la terre, le sable ou le ciment, d'éléments tubulaires en forme de tube (6), caractérisé en ce que l'on enfile un tube (6) sur un outil (1) présentant une tige (2) dont l'extrémité basse (3) dépassant du tube (6) est en pointe et dont l'extrémité haute, dépassant également du tube est en forme de poignée (4); en ce que l'on enfonce l'outil garni du tube dans son milieu récepteur et en ce que l'on retire l'outil (1) lorsque la profondeur d'enfoncement désirée est atteinte.

2. Outil enveloppé d'un tube enfonçable dans le sol, constitué par une tige dont l'extrémité inférieure est en pointe tandis que l'extrémité supérieure forme une poignée, caractérisé en ce que la tige (2) est d'un diamètre inférieur au diamètre interne du tube (6) afin d'être enfilée dans ledit tube, en ce que l'extrémité en pointe (3) et l'extrémité formant poignée (4) de la tige (2) dépassent du tube (6) et en ce que des moyens de butée (4, 5) pour le tube (6) sont prévus sur la tige (2).

3. Outil enveloppé d'un tube enfonçable dans le sol selon la revendication 2, caractérisé en ce que la butée est formée par une rondelle (5) disposée au niveau du raccordement entre la tige (2) et la poignée (3).

4. Outil enveloppé d'un tube enfonçable dans le sol selon la revendication 2 ou 3, caractérisé en ce qu'il est muni en outre d'un gabarit d'enfoncement (7).

5. Outil enveloppé d'un tube enfonçable dans le sol selon la revendication 4, caractérisé en ce que le gabarit (7) est un tube coaxial à la tige (2) qui s'étend sensiblement sur les deux tiers de la longueur de ladite tige.

6. Outil enveloppé d'un tube enfonçable dans le sol selon la revendication 3 en combinaison avec la revendication 4 ou 5, caractérisé en ce que le gabarit d'enfoncement (7) est fixé sous la rondelle (5).

7. Outil enveloppé d'un tube enfonçable dans le sol selon l'une quelconque des revendications 4 à 6, caractérisé en ce que le gabarit est muni à son extrémité inférieure d'un bourrelet (8) augmentant sa surface d'appui.

8. Outil enveloppé d'un tube enfonçable dans le sol selon l'une quelconque des revendications 2 à 7, caractérisé en ce que la poignée (4) est formée par une boucle.

9. Outil enveloppé d'un tube enfonçable dans le sol selon l'une quelconque des revendications 2 à 7, caractérisé en ce que la poignée est en forme de manche massif à frapper.

## Claims

1. A method of placing in a medium, such as earth, sand or cement, tubular elements in the form of a tube 6, characterised in that a tube (6) is passed along a tool (1) having a rod (2) of which the lower end (3) extending beyond the tube (6) is pointed and of which the upper end, also extending beyond the tube is in the form of a handle (4); in that the tool with the tube thereon is forced into the receiving medium and in that the tool (1) is pulled out when the desired depth of penetration is attained.

2. A tool surrounded by a tube for forcing into the ground, constituted by a rod of which the lower end is pointed, whilst the upper end forms a handle, characterised in that the rod (2) is of a diameter less than the internal diameter of the tube in order to be passed along the interior of the tube, in that the pointed end (3) and the end forming the handle (4) of the rod (2) extend from the tube (6) and in that abutment means (4, 5) for the tube (6) are provided on the rod (2).

3. A tool surrounded by a tube for forcing into the ground according to Claim 2, characterised in that the abutment is formed by a washer (5) disposed in the region of the connection between the rod (2) and handle (4).

4. A tool surrounded by a tube for forcing into the ground according to Claim 2 or 3, characterised in that it is provided in addition with a depth gauge.

5. A tool surrounded by a tube for forcing into the ground according to Claim 4, characterised in that the gauge (7) is a tube coaxial with the rod (2) which extends over substantially two thirds of the length of the rod.

6. A tool surrounded by a tube for forcing into the ground according to Claim 3 in combination with Claim 4 or 5, characterised in that the depth gauge (7) is fixed beneath the washer (5).

7. A tool surrounded by a tube for forcing into the ground according to any one of Claims 4 to 6, characterised in that the gauge is provided at is lower end with a flange (8) increasing its bearing surface.

8. A tool surrounded by a tube for forcing into the ground according to any one of Claims 2 to 7, characterised in that the handle (4) is formed by a loop.

9. A tool surrounded by a tube for forcing into the ground according to any one of Claims 2 to 7, characterised in that the handle is formed as a solid shaft to be struck.

## Patentansprüche

1. Verfahren zum Anbringen von röhrenförmigen Elementen in Form eines Rohres (6) in einem Untergrund, wie beispielsweise Erde, Sand oder Zement, dadurch gekennzeichnet, daß man ein Rohr (6) auf ein Werkzeug (1) aufschiebt, welches einen Stift (2) aufweist, dessen unteres Ende (3) aus dem Rohr (6) herausragt und mit einer Spitze versehen ist und dessen oberes Ende, welches ebenfalls aus dem Rohr herausragt, die Form eines Griffs (4) aufweist, und dadurch, daß man das mit dem Rohr versehene Werkzeug in seinen Aufnahmeuntergrund hineindrückt und dadurch, daß man das Werkzeug (1) zurückzieht, sobald die gewünschte Eindringtiefe erreicht ist.

2. Mit einem in den Boden einrammbaren Rohr umhülltes Werkzeug, bestehend aus einem Stift, dessen unteres Ende zugespitzt ist, währen das obere Ende einen Griff bildet, dadurch gekennzeichnet, daß der Durchmesser des Stiftes (2) geringer ist als der Innendurchmesser des Rohres (6), damit der Stift in das Rohr eingeschoben werden kann, dadurch, daß das zugespitzte Ende (3) des Stiftes (2) und das Ende des Stiftes, das einen Griff (4) bildet, aus dem Rohr (6) herausragen und dadurch, daß Anschlagvorrichtungen (4, 5) für das Rohr (6) auf dem Stift (2) vorgesehen sind.

3. Mit einem in den Boden einrammbaren Rohr umhülltes Werkzeug nach Anspruch 2, dadurch gekennzeichnet, daß der Anschlag durch eine Scheibe (5) gebildet wird, die in der Höhe der Verbindung zwischen dem Stift (2) und dem Griff (3) angeordnet ist.

4. Mit einem in den Boden einrammbaren Rohr umhülltes Werkzeug nach Anspruch 2 oder 3, dadurch gekennzeichnet, daß es außerdem mit einer Einrammschablone (7) versehen ist.

5. Mit einem in den Boden einrammbaren Rohr umhülltes Werkzeug nach Anspruch 4, dadurch gekennzeichnet, daß die Schablone (7) ein mit dem Stift (2) koaxiales Rohr ist, das sich ungefähr über zwei Drittel der Länge des Stiftes erstreckt.

6. Mit einem in den Boden einrammbaren Rohr umhülltes Werkzeug nach Anspruch 3 in Kombination mit Anspruch 4 oder 5, dadurch gekennzeichnet, daß die Einrammschablone (7) auf der Scheibe (5) befestigt ist.

7. Mit einem in den Boden einrammbaren Rohr umhülltes Werkzeug nach einem beliebigen der Ansprüche 4 bis 6, dadurch gekennzeichnet, daß die Schablone an ihrem unteren Ende mit einem Wulst (8) versehen ist, der seine Auflagefläche vergrößert.

8. Mit einem in den Boden einrammbaren Rohr umhülltes Werkzeug nach einem beliebigen der Ansprüche 2 bis 7, dadurch gekennzeichnet, daß der Griff (4) durch eine Biegung gebildet ist.

9. Mit einem in den Boden einrammbahren Rohr umhülltes Werkzeug nach einem beliebigen der Ansprüche 2 bis 7, dadurch gekennzeichnet, daß der Griff in der Form eines massiven Griffes zum Daraufklopfen ausgebildet ist.

EP 0 244 541 B1

Fig. 1

Fig. 2